# EUROPÄISCHE PATENTANMELDUNG

(11) **EP 1 067 012 A2**
(43) Veröffentlichungstag der Anmeldung: **10.01.2001**
(21) Anmeldenummer: 00114644.8
(22) Anmeldetag: 07.07.2000
(51) Int. Cl.: B60N 2/00

(54) **Sitzelement, insbesondere ein Kraftfahrzeugsitz mit Belastungserkennungsvorrichtung**

(30) Priorität: 07.07.1999 DE 19931379
(71) Anmelder: HBM Wägetechnik GmbH, 64293 Darmstadt (DE)
(72) Erfinder: Wölfelschneider, Jürgen, 64295 Darmstadt (DE); Schlachter, Werner, 64380 Rossdorf (DE); Schrod, Reiner, 64521 Gross-Gerau (DE)
(74) Vertreter: Behrens, Helmut, Dipl.-Ing.

(57) **Zusammenfassung**

Die Erfindung betrifft ein Sitzelement, insbesondere ein Kraftfahrzeugsitzelement mit Belastungserkennungsvorrichtung, das eine gepolsterte Sitzfläche (7) enthält, die mit einer formstabilen Umrandung (1) verbunden ist. Dabei enthält das Sitzelement mindestens einen oder mehrere Gewichtskraftaufnehmer (3, 6), die ein Signal erzeugen, sobald die Sitzfläche (7) mit einer Gewichtskraft belastet wird. An der formstabilen Umrandung (1) oder an einem mit dieser verbundenen Teil ist unter der Sitzfläche (7) ein oder mehrere Gewichtskraftaufnehmer (3, 6) angeordnet, die durch die Belastung der Sitzfläche (7) auslenkbar sind. Dabei besteht der Gewichtskraftaufnehmer (3, 6) aus einer flachen weitgehend horizontal ausgerichteten und mit Dehnungsmeßstreifen (12, 13) applizierten Biegefeder (3, 6), die einseitig an der Umrandung (1) befestigt ist.

## Beschreibung

Die Erfindung betrifft ein Sitzelement, insbesondere ein Kraftfahrzeugsitzelement, mit Belastungserkennungsvorrichtung gemäß dem Oberbegriff des Patentanspruchs 1.

Bei Sitzelementen, insbesondere bei Kraftfahrzeugsitzen ist es häufig erforderlich, genau festzustellen, ob dieser Sitz mit einer Person, mit leichten Gegenständen oder Kleinkindern belegt ist. Fabrikneue Kraftfahrzeuge, insbesondere Personenkraftwagen werden derzeit meist mit Airbags für die Fahrer- und Beifahrerseite ausgerüstet. Bei einem Unfallaufprall soll insbesondere auf der Beifahrerseite verhindert werden, daß der oder die Airbags ausgelöst werden, wenn sich keine Person oder nur ein Kleinkind auf dem Beifahrersitz befindet. Dies ist notwendig, da ein unnötig ausgelöster Airbag erheblichen Schaden verursacht oder insbesondere bei Kleinkindern und Säuglingen lebensgefährliche Verletzungen herbeiführen kann.

So wäre es denkbar, unterhalb eines Sitzelementes eine Wägevorrichtung aus vier Wägezellen anzuordnen und mittels einer Auswertevorrichtung den Airbag erst dann betriebsbereit zu schalten, wenn der Kraftfahrzeugsitz eine bestimmte Belastung überschritten hat, so daß sichergestellt wird, daß sich auch eine schützbare Person auf dem Fahrzeugsitz befindet. Eine derartige Wägevorrichtung würde erhebliche Veränderungen an den Sitzabstützungen erfordern und wäre damit zum Masseneinsatz in Kraftfahrzeugen zu aufwendig.

Der Erfindung liegt deshalb die Aufgabe zugrunde, ein Sitzelement mit einer Belastungserkennungsvorrichtung zu schaffen, durch das mit einfachen Mitteln sicher feststellbar ist, ob eine Sitzfläche mit einer vorgesehenen Person besetzt ist.

Die Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß durch die Integration einer flachen Biegefeder mit Dehnungsmeßelementen in oder unter die Sitzfläche die Sitzkonstruktion weitgehend unverändert beibehalten werden kann. Soweit die Biegefeder unter der Sitzfläche vorgesehen ist, kann vorteilhafterweise auch ein Austausch oder eine Nachrüstung mit einer Belastungserkennungsvorrichtung in vorhandenen Sitzelementen vorgenommen werden, ohne daß das Sitzelement ausgetauscht werden müßte.

Die Erfindung hat weiterhin den Vorteil, daß durch die flache mit Dehnungsmeßelementen besetzte Biegefeder in oder unter der Sitzfläche die degressive Federung gepolsterter Sitzflächen eine sehr genaue Signalauswertung der Belastung im Niedriglastbereich ermöglicht, so daß auf einfache Weise eine Entscheidung in Grenzbereich des Gewichts zwischen Kleinkindern und durch Airbags zu schützender Heranwachsender sicher getroffen werden kann.

Weiterhin bietet die Erfindung noch den Vorteil, daß durch die Anordnung mehrerer Biegefedern mit Dehnungsmeßstreifen in einem Sitzelement diese so auswertbar sind, daß bereits jeweils eine Biegefeder die Funktion der Belastungserkennung wahrnehmen kann, so daß die Betriebssicherheit vervielfacht wird und auch ein Ausfall einer mit Dehnungsmeßstreifen bestückten Biegefeder leicht erkennbar und anzeigbar ist.

Die Erfindung bietet auch den Vorteil, daß insbesondere durch spezielle Auswerteschaltungen auch die tatsächliche Anzahl der besetzten Sitze und Verteilung in Kinos, Theatern, Flugzeugen und dergleichen genau feststellbar ist. Darüber hinaus kann ein derartiges Sitzelement vorteilhafterweise auch zur Zu- oder Abschaltung von gefährlichen oder energieverbrauchenden Geräten in dessen Nähe genutzt werden, soweit das Sitzelement eine Grenzbelastung unter- oder überschreitet.

Die Erfindung bietet darüber hinaus auch den Vorteil, daß eine festgestellte Gewichtsbelastung eines Sitzelementes einer bestimmten Person zugeordnet werden kann, deren vorgegebene und gespeicherte Sitzpositionen dann selbsttätig einstellbar sind.

Die Erfindung wird anhand eines Ausführungsbeispiels, das in der Zeichnung dargestellt ist, näher erläutert. Es zeigen:
- Fig. 1:: eine schematische Schnittzeichnung eines Fahrzeugsitzelementes in Draufsicht;
- Fig. 2:: eine schematische Schnittzeichnung eines Fahrzeugsitzelementes in Seitenansicht, und
- Fig. 3:: eine mit Dehnungsmeßstreifen applizierte Biegefeder.

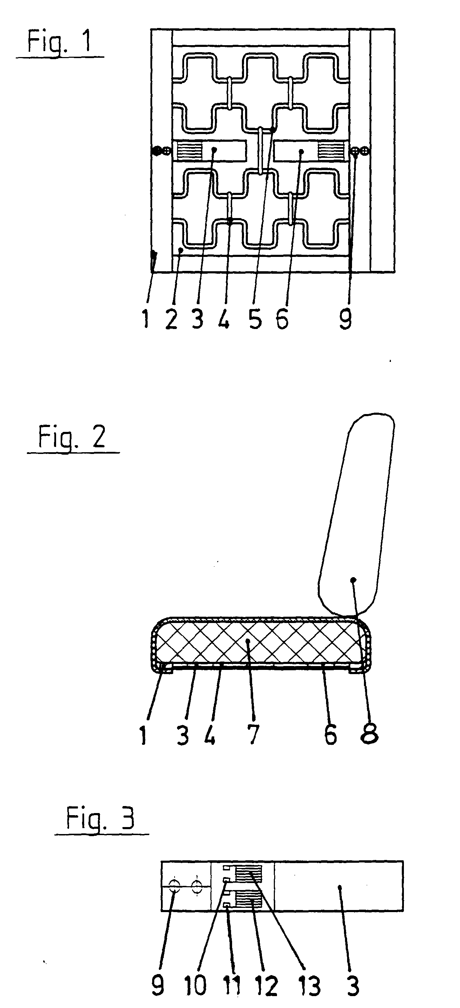

Die Fig. 1 der Zeichnung stellt einen horizontalen Schnitt durch ein Fahrzeugsitzelement 2 unterhalb einer Polsterauflage dar, das eine formstabile Umrandung 1 mit Federelementen 4, 5 und einer Belastungserkennungsvorrichtung enthält.

Die formstabile Umrandung 1, besteht in der Regel aus Stahlblechteilen oder aus Kunststoffspritzelementen oder Holzwerkstoffen. Diese Umrandung 1 bildet einen vertikalen Zwischenteil zwischen der Sitzpolsterung und den Befestigungsschienen, die den Sitz mit dem Fahrzeugchassis verbinden. An der formstabilen Umrandung 1 können sowohl die Befestigungsschienen als auch die Einstellvorrichtungen zur Sitzhöhe und vertikalen Sitzposition befestigt werden.

Oberhalb dieser formstabilen Umrandung 1 sind die elastischen Sitzfedern 4, 5 angebracht, die sich bei Belastung des Sitzes 2 elastisch verformen. Die Sitzfedern 4, 5 sind als flache rechtwinklig gebogene Federdrahtelemente ausgebildet, die an ihren Enden fest mit der Umrandung 1 verbunden sind. Auf dieser Sitzfederung 4, 5 liegt die in Fig. 2 dargestellte Sitzpolsterung 7 auf, die aus einem leder- oder stoffüberzogenen Schaumstoff besteht und die die Sitzfläche des Sitzelements 2 darstellt. Dabei wird die Sitzfläche im hinteren Bereich durch eine vertikale Rückenlehne 8 begrenzt.

Etwa in Höhe der horizontalen Fläche der Sitzfedern 4, 5 sind zwischen diesen ein oder mehrere blattfederartige Biegefedern 3, 6 angeordnet. Dabei sind die Biegefedern 3, 6 in Fahrtrichtung etwa in der Mitte des Sitzes 2 und gegenüberliegend einseitig befestigt. Die Biegefedern 3, 6 können aber auch unterhalb oder zwischen den Federelementen 4, 5 und entgegen der Fahrtrichtung vorgesehen sein. Im Grunde würde auch ein Federelement 3 ausreichen, um die Belastung des Fahrzeugsitzes 2 feststellen zu können.

Die Biegefedern 3, 6 bestehen aus einem flachen länglich rechtwinkligen Blechteil, das in Fig. 3 der Zeichnung näher dargestellt ist. Die Biegefedern 3, 6 bestehen vorzugsweise aus einem Federstahl, der in der Nähe seiner Einspannung 9 mit zwei Dehnungsmeßstreifen 12, 13 appliziert ist. Die Dehnungsmeßstreifen 12, 13 sind in Längsrichtung ausgerichtet, um eine vertikale Auslenkung der Biegefedern 3, 6 durch eine Widerstandsänderung erfassen zu können. Dazu werden die Dehnungsmeßstreifen 12, 13 an den Anschlußpunkten 10, 11 mit Anschlußdrähten versehen, durch die die Dehnungsmeßstreifen 12, 13 vorzugsweise als Wheatstone'sche Brückenschaltung geschaltet werden. Dadurch wird bei einer Sitzbelastung ein Signal erzeugt, das der Größe der jeweiligen Gewichtsbelastung entspricht. Da durch die Sitzpolsterung 7 eine degressive Federung in vertikaler Richtung vorgegeben wird, erzeugen die Dehnungsmeßstreifen 12, 13 bei geringen Belastungen einen verhältnismäßig steilen linearen Signalanstieg, so daß insbesondere geringe Sitzbelastungen sehr genau feststellbar sind.

Die Biegefedern 3, 6 sind vorzugsweise bei Fahrzeugeinzelsitzen ca. 10 bis 30 mm breit, 100 bis 200 mm lang und ca. 1 bis 2 mm dick und gerade ausgerichtet. Die Biegefedern 3, 6 können je nach Sitzkonstruktion und Befestigungsmöglichkeit auch andere Abmessungen und Formgebungen aufweisen. Die Ausbildung der Biegefedern 3, 6 muß nur so vorgesehen sein, daß diese durch die Gewichtsbelastung der Sitzfläche 7 entsprechend der Belastung auslenkbar sind. Die Einspannung 9 der Biegefedern 3, 6 erfolgt dabei vorzugsweise durch eine Schraub- oder Nietverbindung an der Umrandung 1 des Sitzunterteils. Die Einspannung 9 bzw. die Befestigung kann aber auch an einem mit der Umrandung 1 verbundenen Teil bzw. einem gegenüber der Sitzfläche 7 vertikal angeordneten ortsfesten Sitzteil erfolgen. Vorzugsweise wird die Elastizität der Biegefedern 3, 6 so gewählt, daß die Federung des Sitzes 2 nicht wesentlich beeinträchtigt wird, so daß die Auslenkung im wesentlichen der vertikalen Auslenkung der Sitzfläche 7 entspricht. Da bei komfortablen Fahrzeugsitzen bereits elektrische Stellmotoren vorgesehen sind, mit denen die Sitzpositionen einstellbar sind, kann im Sitzunterteil gleichzeitig eine elektrische Auswertevorrichtung zur Belastungserkennung angeordnet sein. Dabei können beide Biegefedern 3, 6 zu einer Wheatstone'schen Vollbrückenschaltung verschaltet sein, mit der die Belastung der Sitzfläche 7 relativ genau auswertbar ist. Einer derartigen elektrischen Auswerteschaltung kann ein bestimmter Belastungswert vorgegeben werden, mit dessen Überschreitung die dem Sitz 2 zugeordneten Airbags erst aktiviert werden, so daß die Airbags beispielsweise bei Besetzung mit Kleinkindern und Säuglingen oder anderen leichten Gegenständen nicht auslösbar sind.

Die Auswerteeinrichtung kann aber auch so ausgebildet sein, daß bei einer vorher festgestellten Belastung diese einer bestimmten Person zugeordnet wird, wobei sich deren gespeicherte Sitzeinstellung später selbsttätig wieder einstellt. Gleichzeitig lassen sich mit einem derartigen Sitz 2 auch Signal- und Anzeigeeinrichtungen aktivieren, die ein Nichtanlegen des Gurtes signalisieren oder anzeigen. Eine hohe Nichtaktivierungssicherheit von Airbags ist dadurch erreichbar, daß mehr als eine mit Dehnungsmeßstreifen 12, 13 applizierte Biegefeder 3, 6 im Sitzelement 2 vorgesehen ist, wobei durch eine Vergleicherschaltung stets die Funktionsfähigkeit der Belastungserkennungsvorrichtung feststellbar ist.

Derartige Sitzelemente 3 mit Belastungserkennungsvorrichtungen sind aber auch im stationären Bereich einsetzbar. So können auch derartige Sitzelemente in Kinos, Theatern, Flugzeugen, öffentlichen Einrichtungen vorgesehen werden, um die tatsächliche Anzahl von Personen oder Kleinkindern oder deren Sitzverteilung jederzeit feststellen zu können. Weiterhin können derartige Sitzelemente 2 auch an gefährlichen Maschinen und Geräten angebracht werden, wobei damit Ein- oder Abschaltkreise koppelbar sind, die die gekoppelten Geräte ein- oder ausschalten, falls die zugeordnete Sitzfläche eine Grenzbelastung über- oder unterschreitet. Insbesondere kann dadurch verhindert werden, daß Kleinkinder bestimmte Geräte aktivieren können.

## Patentansprüche

1. Sitzelement, insbesondere ein Kraftfahrzeugsitzelement mit Belastungserkennungsvorrichtung, das eine gepolsterte Sitzfläche enthält, die mit einer formstabilen Umrandung verbunden ist, wobei das Sitzelement mindestens einen Aufnehmer enthält, der ein Belastungssignal erzeugt, sobald die Sitzfläche mit einer Gewichtkraft belastet wird, dadurch gekennzeichnet, daß an der formstabilen Umrandung (1) oder an einem mit dieser verbundenen Teil in oder unter der Sitzfläche (7) mindestens eine flache weitgehend horizontal ausgerichtete mit Dehnungsmeßstreifen (12, 13) applizierte Biegefeder (3, 6) einseitig befestigt ist, die durch Belastung der Sitzfläche (7) auslenkbar ist.

2. Sitzelement nach Anspruch 1, dadurch gekennzeichnet, daß die formstabile Umrandung (1) aus einem oder mehreren vertikalen oder horizontalen Blechteilen, Holzteilen oder einem rechteckigen Kunststoffspritzteil besteht, der die gepolsterte Sitzfläche (7) mit seinen Auflagerpunkten, Abstützelementen oder Sitzschienen verbindet.

3. Sitzelement nach Anspruch 1 oder 2, dadurch gekennzeichnet, daß im Zwischenraum der Umrandung (1) Federelemente (4, 5) vorgesehen sind, die die Sitzpolsterung (7) elastisch abstützen, wobei unter der Sitzpolsterung im horizontalen Bereich der Federelemente eine oder mehrere Biegefedern (3, 6) vorgesehen sind, die von der Umrandung (1) zur Sitzfläche gerichtet sind.

4. Sitzelement nach einem der vorhergehenden Ansprüche, dadurch gekennzeichnet, daß die Biegefedern (3, 6) als langgestreckte rechteckige gerade Federblechelemente ausgebildet sind, die im Bereich ihrer Einspannung (9) mindestens mit längsgerichteten Dehnungsmeßstreifen (12, 13) appliziert sind, die ein Signal erzeugen, das ihrer vertikalen Auslenkung proportional ist.

5. Sitzelement nach einem der vorhergehenden Ansprüche, dadurch gekennzeichnet, daß das Sitzelement als Kraftfahrzeugsitzelement ausgebildet ist, das mit einer Auswertevorrichtung verbunden ist, die die Gewichtsbelastung mindestens im unteren Bereich bis mindestens 20 kg ermittelt und erst bei Überschreitung einer vorgegebenen Grenzbelastung einen oder mehrere Airbags aktiviert.

6. Sitzelement nach einem der vorhergehenden Ansprüche, dadurch gekennzeichnet, daß das Sitzelement als Kraftfahrzeugsitzelement ausgebildet ist, das mit einer Auswertevorrichtung verbunden ist, das die Gewichtsbelastung ermittelt und einer bestimmten Person zuordnet und dessen vorgegebene Sitzpositionseinstellungen gespeichert sind und die dann nachfolgend selbsttätig eingestellt werden.

7. Sitzelement nach einem der vorhergehenden Ansprüche, dadurch gekennzeichnet, daß mehrere Sitzelemente mit einer Auswertevorrichtung vorgesehen sind, die mit Hilfe der festgestellten Sitzbelastungen oder bei Überschreitung vorgegebener Grenzbelastungen die tatsächliche Anzahl der besetzten Sitzelemente und/oder deren Verteilung ermittelt.

8. Sitzelement nach einem der vorhergehenden Ansprüche, dadurch gekennzeichnet, daß für ein oder mehrere Sitzelemente eine Auswertevorrichtung vorgesehen ist, die ein oder mehrere Sitzelemente mit gefahrträchtigen, energieverbrauchenden oder anderen vorbestimmten Geräten koppelt, wobei die Geräte bei Über- oder Unterschreitung einer vorgegebenen Grenzbelastung der Sitzelemente aktivierbar oder deaktivierbar sind.
